# EUROPEAN PATENT APPLICATION

(11) **EP 1 662 137 A1**
(43) Date of publication of application: **31.05.2006**
(21) Application number: 06003456.8
(22) Date of filing: 14.06.2001
(51) Int. Cl.: F03D 1/06

(54) **A wind turbine wing with noise reduction means**

(30) Priority: 20.06.2000 DK 200000956
(62) Divisional of application: 01943176.6
(71) Applicant: LM GLASFIBER A/S, 6640 Lunderskov (DK)
(72) Inventor: Larsen, Peter Nohr, 2400 Copenhagen NV (DK)
(74) Representative: Jensen, Peter Kim

(57) **Abstract**

For the purpose of reducing the inevitable noise from the flow of air over a rotating wind turbine wing part of the wing surface is provided with means for changing its acoustic reflection. These means for changing the acoustic reflection may be formed in an indentation on the upper side provided with a sound absorbing material, or provided with a plate mounted on compliant parts. A possibility is also to provide the indentation with a resonance-absorbing element. A final possibility is to provide the upper side, the lower side, or the trailing edge of the wing with openings leading to one or several cavities inside the wing. By the invention the means for changing the acoustic reflection are integrated into the wing, so that the flow around the wing is unaffected and the noise from the different noise sources are reduced in an effective way.

## Description

The invention concerns a wind turbine wing with noise reduction means, where the wing is a surface with an upper and a lower side interconnected at a trailing edge and where one or several cavities are established between the upper and the lower sides.

Such a wind turbine wing having noise reduction means formed by small diffusers at the trailing edge is known from DE 19738278A1 described below.

Through the last decades, wind turbines have been used for energy production as alternatives or supplements to more traditional energy sources like oil, coal, natural gas, etc.

In contrast to the traditional energy sources, wind energy is produced without any pollution, and the nature of the source (the wind) is everlasting.

During operation, however, the wind turbine wings produce a considerable amount of noise, which increases with the size and speed of the wing. The noise may be due to two different types of sources, they are:
1) Mechanical noise arising from the gears and the generator located in the machine compartment at the top of the turbine.
2) Noise arising from the airflow around the wings.

The first type of noise may be controlled by traditional means, like enclosure and vibration isolation of the noise sources. Since the control of this type of noise sources is not the scope of the present invention, it will not be further discussed here.

The second type of noise may normally be separated into four independent contributions, namely :

### a) Noise cause by turbulence in the air.

This noise type occurs close to the tip of the wing and over the whole length of the wing chord. The noise is relatively low frequency with a dominating frequency range from about 100 Hz to about 500 Hz.

### b) Noise from the turbulent boundary layer.

This noise type is created as a consequence of the passage of air over the wing surface. The source is most powerful close to the trailing edge, where the thickness of the boundary layer is biggest and where, furthermore, the presence of the edge enhances the noise. The noise is radiated in a frequency range from about 200 Hz to about 1000 Hz.

### c) Noise from vortex shedding from the trailing edge of the wind turbine wing.

This noise is due to the creation of vortices in the transition area, where the wing surface ends in a more or less abrupt trailing edge. The noise from this type of source is radiated in a relatively narrow frequency range depending on the local air velocity and the bluntness of the trailing edge. The frequency range is typically from about 1000 Hz to about 1200 Hz. d) Noise from the tip vortex.

Due to the lift on the wing, a powerful rotation of the air-a vortex-is created where the wing ends at the tip. The vortex is not in itself a powerful noise source, but when the vortex hits the trailing edge, an interaction takes place that considerably enhances its ability to radiate noise. The noise is radiated in a frequency range from about 800 Hz to about 2000 Hz.

All strengths of the mentioned four sources all increase strongly with air velocity over the wing. The air velocity is a function of the wind speed and of the local (velocity of rotation of the wing.

To summarize, the fact that the wind turbine wing is reflecting sound in the areas close to the tip and to the trailing edge is greatly enhancing the noise.

The radiated noise from wind turbines may not be neglected and may be annoying to people living in there vicinity, which again means that wind turbines must be placed away from residential areas.

This is the background for the wish to control the noise from wind turbines.

Different designs for the control of noise from wind turbines are already described in the literature.

DK 172218 B1 describes a design, where the trailing edge of a wind turbine wing is provided with a compliant extension for the purpose of reducing the noise from vortex shedding at the trailing. Hence, only the mere generation of noise is reduced. Noise already generated (i.e. noise generated at the trailing edge or elsewhere on the wing) is not reduced by this known technique.

EP 0 652 367 A1 describes a wind turbine wing with a saw-tooth formed trailing edge, for the purpose of reducing the noise generated at the trailing edge. A trailing edge with a saw-tooth form causes the vortices formed here to be more irregular and hence the generated noise to be weaker, because the individual vortices are not able to enhance each other. Again, only the generation of noise is reduced. This technique will not reduce noise once it has been generated, neither at the trailing edge nor elsewhere on the wing.

DK B 172127 B1 shows a construction where the internal cavity of the wing is filled with a noise absorbing material but without any connection to the exterior of the wing. The noise absorbing material damps standing waves in the wing cavity, but will not influence the reduction of flow noise on the exterior surface of the wing, due to the wing's generally low sound transmission.

Finally, DE 19738278 A1 describes a construction, with diffusers at the trailing edge. This construction only changes the airflow-like the rest of the known techniques-in such a way that less noise is radiated. However, indentations shaped according to DE 19738278 A1 are also able to reduce already generated noise. But a diffuser or any other simple disturbance-is only able to reduce noise with wavelengths of the same order of magnitude as the physical dimensions of the diffuser. Due to the relatively small thickness of the wing at the trailing edge, the physical dimensions of the diffusers are small, and hence the reduced wavelengths are also small. A small wavelength means a high frequency and for the described design typically above 5 kHz, i.e. without practical significance for noise from wind turbines.

Furthermore, it is known to reduce the noise generated by other rotating devices than wind turbines.

US 6,139,259 discloses a turbine having stationary guide vanes and fan struts provided with a plurality of cross-flow channels extending from one side thereof to another side thereof in order to change the pressure field so as to reduce the noise generated by the turbine. The blades of the turbine rotor do not have noise reduction means.

US 5,813,625 discloses helicopter rotor blades being provided with a plurality of apertures at the leading edge thereof. A pressurised fluid is directed out through the apertures for changing the shape of the leading edge perceived by the air flow across the blade and thereby reducing the noise generated by the blades.

US 4,720,239 discloses a turbo machine comprising at least one row of stator blades and at least one row of rotor blades. On their downstream-facing surfaces the stator blades are provided with groove means for dispersing pressure waves reflected from the row of rotor blades. Thereby the noise generated by the reflecting waves and the consequently by the turbo machine is reduced.

US 3,779,338 discloses a foil or blade having porous surfaces at least at the leading or trailing edge thereof in order to reduce the flow impedance and thereby reducing the noise generated by the fluid flow across the foil or blade.

Consequently, the purpose of the present invention is to describe a construction, which is able to reduce all types of flow-generated noise from a wind turbine, i.e. reducing the noise sources previously described.

The purpose of the invention is satisfied by a wing for a wind turbine of the type stated in the preamble of claim 1 and having the characterising features of claim 1.

By means for changing the sound reflection are here understood means that will influence the reflected sound from a surface. For a sound source close to a hard reflecting surface-like a wind turbine wing-the part of sound that hits the surface is reflected back again to enhance the sound in the opposite direction. Removing the reflected sound obviously reduces the noise. However, if the reflected sound may be altered in such a way that it acts opposite (has opposite phase) to the sound coming directly from the source, the source itself may be reduced. And hence an even larger noise reduction may be achieved.

In order to adapt the means for changing the sound reflection to specific needs in an easy way, it is an advantage that the wing -as described in claim 9 - has an indentation for reception of the means for changing the sound reflection. This indentation may be on the upper side, on the lower side or on the trailing edge.

In that way the wing may be built as a separate unit, and the adaptation is done by the design of the sound reflecting means as an add-on. Three alternative means for changing sound reflection are considered, namely:
- A): As a sound absorbing material. By this is understood a material that when exposed to a sound wave only reflects back a small part of the energy in the sound. The main part of the sound energy is absorbed (lost) in the material. An example of a material like that is mineral wool. Sound absorbing materials often damps over a wide frequency range, typically from 100 Hz to 10 kHz.
- B): Resilient parts, where the resilient part may be a resiliently mounted plate, which by the sound wave is forced to vibrate at a frequency close to the resonance frequency of the parts. In the frequency range close to the resonance frequencies of the parts, the vibrations of the parts will be opposite the excitation from the sound wave. Hence, the radiate sound waves from the parts eliminate not only the exciting sound wave but also the sound source itself. Resilient parts have an advantage: the may be optimised to reduce exactly a certain frequency range. Even low frequencies under 500 Hz may be reduced, using a system with small physical dimensions. By adding damping (internal loss) to the vibrating system the obtained noise reduction is weaker, but will cover a wider frequency range.
- C): As a resonance-absorbing element (claim 9). The function of this system resembles very much the function of resilient parts. In this case the resonance occurs in a system consisting of: a cavity and a more or less narrow connection to the outer of the wing. The air in the connection acts like a mass, and the air in the cavity acts as a spring. In the same way as described under B) this element will radiate sound waves in opposite phase. The element may easily be adapted even to low frequencies. Frequencies below 500 Hz are easily reduced with this element built into the trailing edge of a wind turbine wing. By having several connections to the cavity all with different design, noise reduction in a wide frequency range may be obtained. By adding loss to the system, the effect may be expanded to a wider frequency range at the expense of the amount of reduction. A system like that is often denoted a Helmholtz resonator.

An appropriate procedure for mass production is to realize the means for changing the acoustic reflection by means of holes in the upper side in the lower side or in the trailing edge (claim 1) to form acoustic connections to the cavity. In this way a wind turbine wing is realized, where the noise reducing means are integrated directly in the wing.

Appropriate ways of realizing this embodiment are given in claims 2-8.

The invention will be described in detail below with reference to the accompanying drawings, in which
Fig. 1 is a part of a wind turbine wing with noise reducing means according to a first embodiment not being according to the present invention.
Fig. 2 is a part of a wind turbine wing with noise reducing means according to a second embodiment not being according to the present invention.
Fig. 3 is a part of a wind turbine wing with noise reducing means according to a third embodiment being according to the present invention.
Fig. 4 is a part of a wind turbine wing with noise reducing means according to a fourth embodiment being according to the present invention.
Fig. 5 is a part of a wind turbine wing with noise reducing means according to a fifth embodiment being according to the present invention.
Fig. 6 is a part of a wind turbine wing with noise reducing means according to a sixth embodiment being according to the present invention.
Fig. 7 is a construction detail of the embodiment shown in Fig. 3.
Fig. 8 is a second construction detail of the embodiment shown in Fig. 3.
Fig. 9 is a third construction detail of the embodiment shown in Fig. 3.
Fig. 10 is a fourth construction detail of the embodiment shown in Fig. 3.
Fig. 11 is a fifth construction detail of the embodiment shown in Fig. 3.

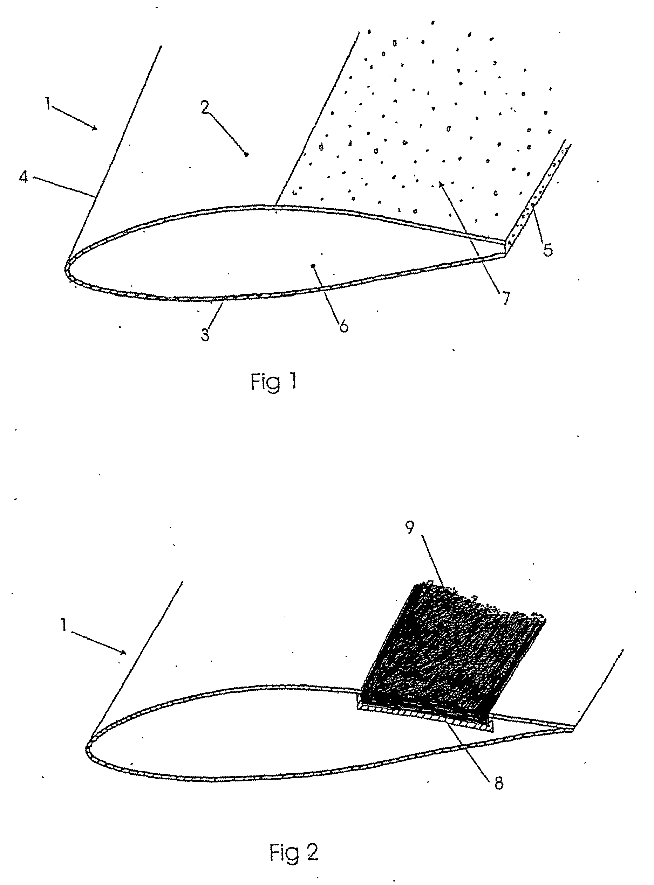

In Fig. 1 the number 1 refers to the complete wing for a wind turbine shown cut through. As may be seen the wing 1 has an upper side 2 and a lower side 3, in the left hand side the two sides interconnect along a bended edge 4 and in the right hand side they end along a trailing edge 5. Between the upper side 2 and the lower side 3 is a cavity 6.

As previously described the wing generates considerable noise during operation if it is not subject to noise reduction means. A first embodiment to establish noise reduction means is to change the acoustic reflection of the complete or parts of the upper side 2, the lower side 3, or the trailing edge 5.

In Fig. 1 the number 7 refers to an example, where the acoustic properties of the upper part 2 have partially been changed by surface treatment.

In Fig. 2 the wing is shown again, but this time with an indentation 8. By filling the indentation with a sound absorbing material and thereby a material for change of the sound reflection, the noise from the wing under operation may be reduced.

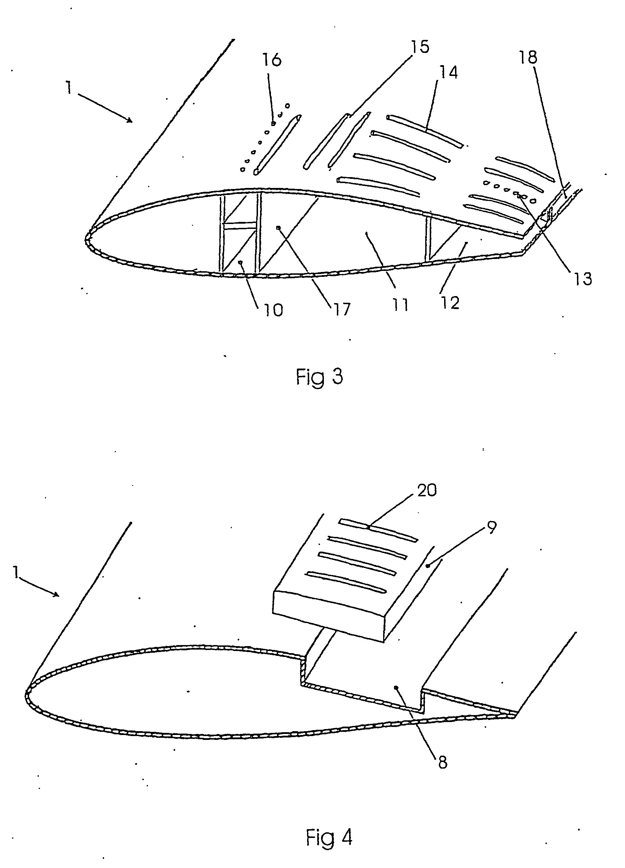

In Fig. 3 is shown a third embodiment, where the wing on its upper side is provided with slits 14,15,18 and holes 13, 16 with connection to a plurality of cavities 10,11,12 between the upper and lower sides of the wing. The cavities may be established by putting up wall members, for example like 17. By this construction the noise reduction properties may be tailored to selective reduction at different frequencies and levels.

Fig. 4 shows a variant of the embodiment according to Fig. 3, where a resonance-absorbing element 9 with slits 20 is placed in the indentation 8. Instead of slits 20, holes (not shown) could have been used alternatively in the element.

This embodiment is especially suited for manufacturing of wings in small quantities, since the wing may be built as a standard unit that may be adapted to the given acoustical conditions by means of a resonance-absorbing element. By having a separate element it may be manufacturer by a different and more optimal technique than the rest of the wing.

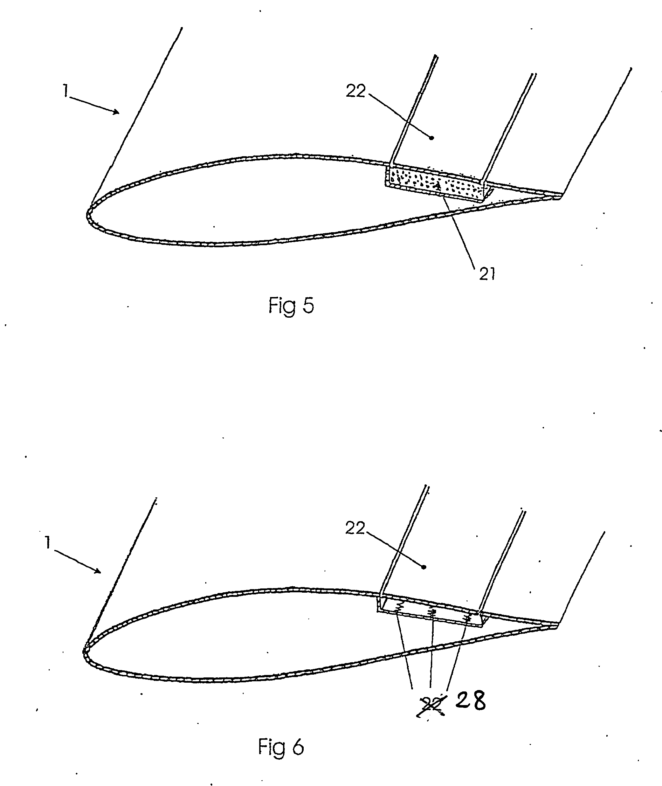

Fig. 5 shows an embodiment, where a compliant element is formed in the indentation on the wing. The element consists of a compliant part 21, which on its upper side is provided with a surface 22 in the same material as the rest of the wing's 1 upper side.

A variant of this embodiment is shown in Fig. 6, where the surface 22 is mounted on springs 28.

For the purpose of avoiding any disturbance to the flow, the narrow slit that arises between the compliant element and the wing may ideally be covered by a membrane or the like.

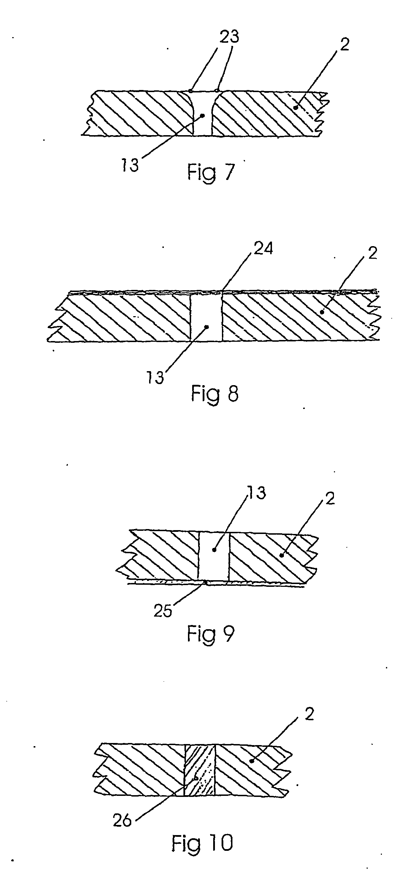

In Figs. 7-11 are shown in more details how the holes 13,16 may be designed. In Fig. 7 the holes 13 have rounded edges at the exterior side of the wing. This is in order to avoid vortex shedding and hence noise from the flow across the hole.

Fig. 8 shows holes with abrupt edges, but here covered by an impermeable membrane 24. In this way, the hole will not have any negative influence what so ever on the flow over the wing. The mass and stiffness of the membrane must of cause be taken into account when the properties of the resonance-absorbing element are calculated.

Fig. 9 shows an embodiment, where the part of the hole 13 that faces the cavity of the wing (e. g. 12 in fig. 3) is covered by an air-permeable membrane 25.

This construction adds flow resistance to the system, and thereby the noise reduction of the resonance-absorbing element may be expanded in frequency.

Fig. 10 shows an embodiment, where the hole is filled with an air-permeable material 26. This is another way of adding flow loss to the system, and thereby - as explained earlier - expanding the frequency range of noise reduction.

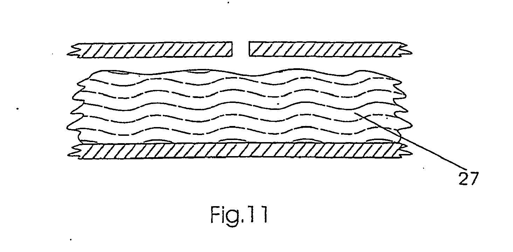

Fig. 11 shows an embodiment, where the cavity is partially filled with a sound absorbing material 27. Again, this adds loss to the system and expands the frequency range of noise reduction.

By the invention it has now been shown how noise reduction of wind turbine wings may be designed. And because of the many possible ways of combining the measures -as given in the claims - it is possible to adapt the solutions to all possible conditions, not only wind conditions but also climatic conditions.

## Claims

1. A wind turbine wing with noise reduction means, where the wing is provided with a surface having an upper and a lower side interconnected at a trailing edge and where one or several cavities are established between the upper and the lower sides, **characterized in that** the noise reduction means are means for changing the sound reflection established on part of the upper side, lower side, or trailing edge, and being holes in the upper side, the lower side, or the trailing edge establishing an acoustic connection to a cavity so as to provide a so-called Helmholtz resonator.

2. A wind turbine wing according to claim 1, **characterized in that** the openings are circular or shaped as slits.

3. A wind turbine wing according to claim 2, **characterized in that** the cavity is divided into a plurality of smaller cavities.

4. A wind turbine wing according to claims 1-3, **characterized in that** the openings are completely or partly filled with a material having airflow resistance.

5. A wind turbine wing according to claims 1-4, **characterized in that** one or several of the sides facing the cavity is/are covered by an air permeable membrane.

6. A wind turbine wing according to claims 1-5, **characterized in that** the upper side is covered by a membrane.

7. A wind turbine wing according to claims 1-6, **characterized in that** the edges of the openings on the wing are rounded.

8. A wind turbine wing according to claims 1-7, **characterized in that** the cavity is completely or partly filled by a sound absorbing material.

9. A wind turbine wing according to claim 1, **characterized in that** the upper side, the lower side or the trailing edge has an indentation for reception of the means for changing the sound reflection, that the means for changing the sound reflection is constituted by a resonance-absorbing element with a cavity, and that the surface of the element is made with openings like slits or holes.
